# EUROPÄISCHE PATENTSCHRIFT

(11) **EP 3 807 112 B1**
(45) Veröffentlichungstag und Bekanntmachung des Hinweises auf die Patenterteilung: **12.07.2023**
(21) Anmeldenummer: 19731135.0
(22) Anmeldetag: 29.05.2019
(51) Int. Cl.: B60K 6/40, B60K 6/405, B60K 6/442, B60K 6/387, F16H 57/04

(54) **ANTRIEBSEINHEIT FÜR EINEN ANTRIEBSSTRANG EINES ELEKTRISCH ANTREIBBAREN KRAFTFAHRZEUGS UND ANTRIEBSANORDNUNG**
DRIVE UNIT FOR A POWERTRAIN OF AN ELECTRICALLY DRIVEABLE MOTOR VEHICLE, AND DRIVE ASSEMBLY
UNITÉ D'ENTRAÎNEMENT POUR UNE CHAÎNE CINÉMATIQUE D'UN VÉHICULE AUTOMOBILE POUVANT ÊTRE ENTRAÎNÉ ÉLECTRIQUEMENT ET SYSTÈME D'ENTRAÎNEMENT

(30) Priorität: 15.06.2018 DE 102018114382
(43) Veröffentlichungstag der Anmeldung: 21.04.2021
(73) Patentinhaber: Schaeffler Technologies AG & Co. KG, 91074 Herzogenaurach (DE)
(72) Erfinder: STOBER, Benjamin, 67480 Forstfeld (FR); HUBER, Lionel, 67410 Drusenheim (FR)
(86) Internationale Anmeldenummer: PCT/DE2019/100475
(87) Internationale Veröffentlichungsnummer: WO 2019/238160

(56) Entgegenhaltungen:
- WO-A1-2010/095610
- DE-A1-102017 127 695
- DE-B4-112006 001 432
- US-A1- 2005 206 251

## Beschreibung

Die Erfindung betrifft eine Antriebseinheit für einen Antriebsstrang eines elektrisch antreibbaren Kraftfahrzeugs, insbesondere eines Hybridkraftfahrzeuges, sowie eine Antriebsanordnung.

Aus dem Stand der Technik sind Antriebseinrichtungen für ein Hybridfahrzeug bekannt, welche unter anderem eine Verbrennungskraftmaschine, eine erste elektrischen Maschine sowie eine zweite elektrische Maschine umfassen.

Die DE 10 2015 222 690 A1, DE 10 2015 222 691 A1 sowie in WO 2017 084 887 A1 beschreiben dazu Verfahren zum Steuern einer derartigen Antriebseinrichtung, wobei die Antriebseinrichtung in mehreren Betriebsmodi betreibbar ist.

In der DE 10 2015 222 690 A1 sowie in der WO2010/095610 A1 wird vorwiegend ein serieller Hybridbetrieb erläutert, in dem das Fahrantriebsdrehmoment mittels der zweiten Elektromaschine bewirkt wird und die Verbrennungskraftmaschine die erste Elektromaschine zur Erzeugung von elektrischer Energie antreibt. Insbesondere in der DE 10 2015 222 690 A1 ist beschrieben, wie die Verbrennungskraftmaschine an einem Arbeitspunkt basierend auf einem kombinierten Wirkungsgrad betrieben wird, der von dem Wirkungsgrad der Verbrennungskraftmaschine und von dem Wirkungsgrad der ersten Elektromaschine abhängt.

In den Dokumenten DE 10 2015 222 691 A1 und WO 2017 084 887 A1 werden ein leistungsorientierter sowie ein verbrauchsorientierter Modus beschrieben, wobei ein jeweiliger Modus von einer Bedingung abhängig ist. Diese Bedingung weist auf, dass ein Sollantriebswert auf einen Zwischenwert erhöht wird, der zwischen einer Verbrennungskraftmaschine-Schwelle, die einen maximalen Antriebswert in einem parallelen Hybridbetrieb repräsentiert, in dem ausschließlich die Verbrennungskraftmaschine ein Fahrantriebsdrehmoment bewirkt, und einer Parallelhybridbetrieb-Schwelle, die einen maximalen Antriebswert in dem parallelen Boost-Hybridbetrieb repräsentiert, liegt.

Die DE 10 2015 222 692 A1, WO 2017 084 888 A1, DE 10 2015 222 694 A1 sowie WO 2017 084 889 A1 beschreiben ein Verfahren zum Betreiben einer Antriebseinrichtung eines Hybridfahrzeugs zum Antreiben eines Antriebsrads, wobei die Antriebseinrichtung eine Verbrennungskraftmaschine, eine mit der Verbrennungskraftmaschine gekoppelte erste Elektromaschine, eine zweite Elektromaschine, einen elektrischen Akkumulator und eine Hauptkupplung zwischen der Verbrennungskraftmaschine und dem Antriebsrad umfasst.

In der DE 10 2015 222 692 A1 sowie der WO 2017 084 888 A1 wird beschrieben, dass die Antriebseinrichtung in einem von drei Betriebsmodi betrieben wird. Einem rein elektrischen Betrieb, einem seriellen Hybridbetrieb oder einem parallelen Hybridbetrieb, wobei das während des Wechsels von dem ersten Betriebsmodus in den zweiten Betriebsmodus bereitgestellte Fahrantriebsdrehmoment einem geeignet wählbaren Verlauf zwischen dem vor und nach dem Wechsel bereitgestellten Fahrantriebsdrehmoment entspricht.

DE 10 2015 222 694 A1 und WO 2017 084 889 A1 offenbaren, dass zwischen der Verbrennungskraftmaschine und dem Antriebsrad weiterhin ein Getriebe umfasst ist. Das Verfahren weist hier auf:
- Betreiben der Verbrennungskraftmaschine bei einer ersten Drehzahl für den ersten Gang in einem parallelen Hybridbetrieb, während ein erster Gang des Getriebes eingelegt ist;
- Wechseln in einen seriellen Hybridbetrieb;
- Öffnen der Hauptkupplung;
- Einstellen einer Drehzahl der Verbrennungskraftmaschine bei geöffneter Hauptkupplung auf eine zweite Drehzahl für einen zweiten Gang des Getriebes in dem parallelen Hybridbetrieb;
- Einlegen des zweiten Ganges des Getriebes;
- Schließen der Hauptkupplung; und
- Wechseln in den parallelen Hybridbetrieb, während der zweite Gang eingelegt ist.

Aus der (nicht vorveröffentlichten) DE 10 2017 128 289.0 ist eine Antriebseinheit für einen Antriebsstrang eines Hybridkraftfahrzeuges bekannt, mit einer Verbrennungskraftmaschine, einer ersten elektrischen Maschine, einer zweiten elektrischen Maschine, einer ersten Übersetzungsstufe und einer Triebwelle der ersten elektrischen Maschine und/oder der zweiten elektrischen Maschine. Des Weiteren umfasst die Antriebseinheit eine Getriebeteileinheit, über die die Triebwelle der jeweiligen elektrischen Maschine mit Radantriebswellen gekoppelt oder koppelbar ist. Eine zweite Übersetzungsstufe ist mit einer Vorgelegeeinheit gekoppelt, wobei die Vorgelegeeinheit eine integrierte Kupplung aufweist und so mit den Radantriebswellen weiter verbunden ist, dass in Abhängigkeit der Stellung dieser Kupplung die Verbrennungskraftmaschine über die zweite Übersetzungsstufe mit den Radantriebswellen koppelbar ist.

Die DE 11 2006 001432 B4 und die (nicht vorveröffentlichte) DE 10 2017 127 695 A1 bzw. die der Familie zugehörige WO2019101264A1lehren einen Antriebsstrang für ein Hybridkraftfahrzeug, welcher eine Getriebeeingangswelle aufweist, die über einen ersten Teilantriebsstrang mit einer ersten elektrischen Maschine und einer Verbrennungskraftmaschine zur Drehmomentübertragung in Wirkbeziehung steht und die über einen zweiten Teilantriebsstrang mit einer zweiten elektrischen Maschine zur Drehmomentübertragung in Wirkbeziehung steht. Die zweite elektrische Maschine ist dauerhaft mit der Getriebeeingangswelle drehmomentübertragend verbunden und die erste elektrische Maschine und die Verbrennungskraftmaschine sind koppelbar zur Drehmomentübertragung mit der Getriebeeingangswelle verbindbar. Dabei kann gemäß DE 10 2017 127 695 A1 die erste elektrische Maschine und/oder die zweite elektrische Maschine gekühlt ausgeführt sein. Besonders ist es bevorzugt, wenn die Kühlung mittels einer Wasserkühlung aus einem Fahrzeug-Kühlkreis oder mittels einer Ölkühlung mit Getriebeöl aus dem Getriebe heraus ausgebildet ist. Weiterhin kann auch die eingesetzte Trennkupplung als eine ölgekühlte Lamellenkupplung ausgebildet sein.

Des Weiteren beschreibt ein jeweiliges genanntes Dokument ein Hybridfahrzeug, welches ein jeweiliges Verfahren ausführen kann, wobei sich der Aufbau des Hybridfahrzeugs im Wesentlichen für alle genannten Dokumente gleicht.

Das im Stand der Technik wiederholt beschriebene Hybridfahrzeug umfasst eine Verbrennungskraftmaschine, eine erste sowie zweite elektrische Maschine, zumindest ein Antriebsrad, eine Hauptkupplung, eine erste und eine zweite Kupplung. Die Hauptkupplung ist dabei zwischen der Verbrennungskraftmaschine und einem Antriebsrad umfasst, die erste Kupplung ist zwischen der ersten elektrischen Maschine und einer Ausgangswelle der Verbrennungskraftmaschine vorgesehen und die zweite Kupplung ist zwischen der zweiten elektrischen Maschine und einem Antriebsrad vorgesehen.

Es ist außerdem bekannt, dass elektrische Maschinen koaxial in einem Gehäuse angeordnet sind. Dabei ist eine elektrische Maschine bzw. deren Rotor beidseitig drehbar gelagert, wobei zumindest eine Lagerung einer jeweiligen elektrischen Maschine eine solche Lagerung vorzugsweise in einer Wand des Gehäuses realisiert ist.

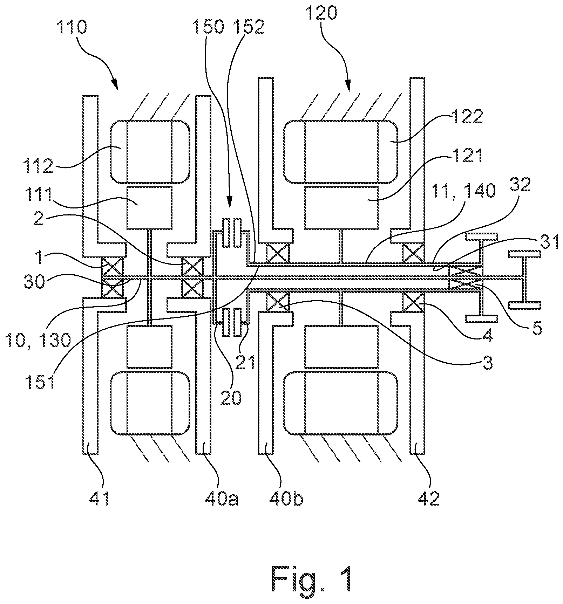

Eine aus dem Stand der Technik bekannte Anordnung zweier elektrischer Maschinen ist in Figur 1 dargestellt. Dabei zeigt Figur 1 eine schematische Darstellung einer Antriebseinheit.

In Figur 1 dargestellt sind eine erste elektrische Maschine 110 sowie eine zweite elektrische Maschine 120, deren Rotoren 111,121 im Wesentlichen koaxial zueinander angeordnet sind, und eine Trennkupplung 150, die in axialer Richtung zwischen den beiden elektrischen Maschinen 110, 120 angeordnet ist.

Die erste elektrische Maschine 110 umfasst einen ersten Stator 112 sowie einen auf einem Rotorträger 10 der ersten elektrischen Maschine 110 gelagerten ersten Rotor 111, wobei der Rotorträger 10 hier eine erste Welle 130 ist. Beidseitig der ersten elektrischen Maschine 110 ist in axialer Richtung jeweils ein Gehäuseelement in Form einer Gehäusewand 41, 40a vorgesehen, nämlich auf der der Trennkupplung 150 abgewandten Seite der ersten elektrischen Maschine 110 eine äußere Gehäusewand 41 und auf der der Trennkupplung 150 zugewandten Seite der ersten elektrischen Maschine 110 eine innere Gehäusewand 40a. Die erste Welle 130 ist dabei über ein erstes Rotationslager 1 der ersten elektrischen Maschine 110 an der äußeren Gehäusewand 41 sowie über ein zweites Rotationslager 2 der ersten elektrischen Maschine 110 an der inneren Gehäusewand 40a gelagert, wobei diese Rotationslager 1, 2 auf der radialen Außenseite 30 der ersten Welle 130 angeordnet sind.

Die zweite elektrische Maschine 120 umfasst einen zweiten Stator 122 sowie einen auf einem Rotorträger 11 der zweiten elektrischen Maschine 120 gelagerten zweiten Rotor 121, wobei der Rotorträger 11 hier eine Ausgangswelle 140 ist. Der Raum, in dem die zweite elektrische Maschine 120 angeordnet ist, ist dabei in axialer Richtung beidseitig von jeweils einer Gehäusewand 40b, 42 begrenzt, nämlich auf der der Trennkupplung 150 abgewandten Seite der zweiten elektrischen Maschine 120 von einer äußeren Gehäusewand 42 und auf der der Trennkupplung 150 zugewandten Seite der zweiten elektrischen Maschine 120 von einer inneren Gehäusewand 40b. Die Ausgangswelle 140 ist dabei über ein erstes Rotationslager 3 der zweiten elektrischen Maschine 120 an der inneren Gehäusewand 40b sowie über ein zweites Rotationslager 4 der zweiten elektrischen Maschine 120 an der äußeren Gehäusewand 42 gelagert, wobei diese Rotationslager 3, 4 auf der radialen Außenseite 32 der Ausgangswelle 140 angeordnet sind.

Die Ausgangswelle 140 ist dabei als Hohlwelle ausgebildet, wobei die erste Welle 130 zumindest abschnittsweise radial innerhalb der Ausgangswelle 140 angeordnet ist. Weiterhin ist ein drittes Rotationslager 5 zur Lagerung der Ausgangswelle 140 zwischen der radialen Innenseite 31 der Ausgangswelle 140 und der radialen Außenseite 30 der ersten Welle 130, somit radial zwischen der Ausgangswelle 140 und der ersten Welle 130, angeordnet.

Die Trennkupplung 150 ist in Drehmoment-Übertragungspfad zwischen der ersten Welle 130 und der Ausgangswelle 140 angeordnet, wobei ein Eingangselement 20 der Trennkupplung 150 mit der ersten Welle 130 drehfest verbunden ist und ein Ausganselement 21 der Trennkupplung 150 mit der Ausgangswelle 140 drehfest verbunden ist, wodurch bei geschlossener Trennkupplung 150 ein Drehmoment von der ersten Welle 130 auf die Ausgangswelle 140 übertragbar ist, und in umgekehrter Richtung.

Es ist bekannt, die sogenannte erste Welle mehrteilig auszugestalten. Dabei kann die erste Welle z.B. eine Nabe sowie eine Eingangswelle umfassen, wobei die Nabe auf der radialen Außenseite der Eingangswelle angeordnet ist und wobei auf der radialen Außenseite der Nabe der Rotor einer elektrischen Maschine angeordnet ist.

Der dargestellte Stand der Technik macht deutlich, dass ein herkömmlicher Aufbau einer Antriebseinheit mit relativ großem axialen Bauraumbedarf sowie hoher Komplexität des Gehäuses und entsprechend hohem Fertigungs- sowie Montageaufwand verbunden ist

Hiervon ausgehend liegt der vorliegenden Erfindung die Aufgabe zugrunde, eine Antriebseinheit sowie eine damit ausgestattete Antriebsanordnung zur Verfügung zu stellen, die einen geringen Bauraumbedarf mit geringen Herstellungskosten sowie geringem Montageaufwand kombiniert.

Die Aufgabe wird durch die Merkmale des unabhängigen Anspruchs 1 gelöst. Vorteilhafte Ausgestaltungen sind in den Unteransprüchen angegeben.

Die Begriffe "axial" und "radial" beziehen sich im Rahmen der vorliegenden Erfindung immer auf die Rotationsachse der elektrischen Antriebseinheit.

Die Erfindung betrifft eine Antriebseinheit für einen Antriebsstrang eines elektrisch antreibbaren Kraftfahrzeugs, insbesondere eines Hybridkraftfahrzeuges, umfassend eine erste elektrische Maschine, eine zweite elektrische Maschine und eine Ausgangswelle, die auch als Getriebeeingangswelle bezeichnet wird, wobei ein Rotor der zweiten elektrischen Maschine drehfest mit der Ausgangswelle verbunden ist. Die Antriebseinheit weist weiterhin eine Trennkupplung auf, mit der ein Rotor der ersten elektrischen Maschine und damit eine an einer mit dem Rotor der ersten elektrischen Maschine drehfest verbundenen ersten Welle angeschlossene Verbrennungskraftmaschine zur Drehmomentübertragung mit der Ausgangswelle verbunden ist. Es ist erfindungsgemäß vorgesehen, dass der Rotor einer der elektrischen Maschinen zumindest indirekt radial am Rotor der anderen elektrischen Maschine mittels eines dritten Rotationslagers abgestützt ist.

Es ist dabei insbesondere vorgesehen, dass die beiden elektrischen Maschinen in Reihe angeordnet sind. In einer bevorzugten Ausgestaltung ist vorgesehen, dass die Rotoren der beiden elektrischen Maschinen bzw. deren Rotationsachsen koaxial angeordnet sind.

Die Trennkupplung ist eine schaltbare Kupplung, die von einem offenen Zustand in einen geschlossenen Zustand und umgekehrt geschaltet werden kann.

Die radiale Innenseite der Trennkupplung kann dabei drehfest mit der ersten Welle an der ersten elektrischen Maschine verbunden sein, und die radiale Außenseite der Trennkupplung kann mit der Ausgangswelle, die drehfest mit dem Rotor der zweiten elektrischen Maschine verbunden ist, verbunden sein.

Des Weiteren kann die Antriebseinheit ein Getriebe aufweisen, welches mit der auch als Getriebeeingangswelle bezeichneten Ausgangswelle der Antriebseinheit in Wirkverbindung steht, so dass ein von der Ausgangswelle zur Verfügung gestelltes Drehmoment bzw. die von der Ausgangswelle realisierte Drehbewegung über das Getriebe über- oder untersetzt an eine weitere Getriebeeinheit eines Kraftfahrzeugs geleitet werden kann, oder auch direkt auf Antriebsräder eines Kraftfahrzeuges geleitet werden kann.

Dieses Getriebe kann ein Differenzial-Getriebe umfassen oder als ein solches ausgestaltet sein.

Erfindungsgemäß stützt sich der Rotor der abstützenden elektrischen Maschine über seinen Rotorträger an einer Gehäusewand ab, wobei sich der Rotor der abgestützten elektrischen Maschine auf dem jeweiligen anderen Rotorträger radial abstützt.

Erfindungsgemäß ist der Rotor der abstützenden elektrischen Maschine der Rotor der zweiten elektrischen Maschine, sodass sich die zweite elektrische Maschine über ihren Rotorträger an zwei axial gegenüberliegenden Enden an der Gehäusewand abstützt. Der Rotor der ersten elektrischen Maschine stützt sich über deren Rotorträger an dem Rotorträger der zweiten elektrischen Maschine zumindest mittelbar radial ab.

Dabei kann vorgesehen sein, dass zwischen den beiden elektrischen Maschinen eine innere Gehäusewand angeordnet ist, wobei die Trennkupplung in axialer Richtung zwischen der ersten elektrischen Maschine und der inneren Gehäusewand angeordnet ist.

Somit befinden sich zwischen den beiden elektrischen Maschinen in axialer Richtung lediglich eine Trennkupplung sowie eine innere Gehäusewand, wobei an der inneren Gehäusewand lediglich ein Rotationslager für den Rotor der zweiten elektrischen Maschine angeordnet ist.

Weiterhin ist erfindungsgemäß der Rotorträger der ersten elektrischen Maschine eine erste Welle, mit der der Rotor der ersten elektrischen Maschine drehfest verbunden ist.

Zudem wird der erfindungsgemäße Gegenstand derart realisiert, dass die Ausgangswelle eine Hohlwelle ist, wobei die erste Welle abschnittsweise radial innerhalb der Ausgangswelle angeordnet ist.

Entsprechend ist vorgesehen, dass die Ausgangswelle durch zwei Rotationslager im Gehäuse der Antriebseinheit gelagert ist, wobei die beiden der Ausgangswelle zugeordneten Rotationslager in axial gegenüberliegenden Endbereichen der Ausgangswelle angeordnet sind.

Die der ersten elektrischen Maschine zugeordnete erste Welle stützt sich mit einem ersten Rotationslager ebenfalls am Gehäuse der Antriebseinheit ab, und am axial gegenüberliegenden Endbereich stützt sich die erste Welle an der Ausgangswelle radial ab.

Insbesondere ist dabei vorgesehen, dass die Abstützung mittels erstem Rotationslager am Gehäuse an der der zweiten elektrischen Maschine axial abgewandten Seite der ersten elektrische Maschine ausgeführt ist, und das die Abstützung mittels drittem Rotationslager an der Ausgangswelle an der Seite der zweiten elektrischen Maschine ausgeführt ist, die axial der ersten elektrischen Maschine abgewandt ist.

Weiterhin ist die erste Welle erfindungsgemäß eine Hohlwelle. Dabei kann vorgesehen sein, dass der durch die Ausgestaltung als Hohlwelle entstehende radiale Innenraum der ersten Welle zur Führung von Kühlmittel ausgestaltet ist.

Gemäß einer weiteren Ausführungsform stützt sich die erste Welle durch ein Rotationslager, welches insbesondere als Nadellager ausgebildet ist, radial an der radialen Innenseite der Ausgangswelle ab. Im Vergleich zu herkömmlichen Ausführungsformen kann dadurch radialer Bauraum eingespart werden.

In einer Ausführungsform der erfindungsgemäßen Antriebseinheit ist die erste Welle einstückig ausgebildet.

Das bedeutet, dass im Gegensatz zu herkömmlichen Ausführungsformen, bei denen die erste Welle aus einer Eingangswelle und einer darauf angeordneten Nabe ausgebildet ist, in der vorliegenden erfindungsgemäß ausgestalteten Ausführungsform die erste Welle ein Bauteil ist, welches gegebenenfalls mehrere Maschinenelemente, wie zum Beispiel Lagerstellen, Verzahnungen oder auch Drehmoment-Übertragungseinrichtungen, aufweisen kann. Demnach kann gegenüber dem Stand der Technik die Anzahl der Bauteile reduziert werden.

Zum drehfesten Anschluss der Trennkupplung an die erste Welle ist vorzugsweise vorgesehen, dass die erste Welle einen Absatz ausbildet, der die radiale Innenseite der Trennkupplung bzw. ein Eingangselement der Trennkupplung ausbildet oder mit dieser drehfest verbunden ist. Somit ist ein Eingangselement der Trennkupplung drehfest mit dem Rotor der ersten elektrischen Maschine verbunden.

Gemäß einer weiteren Ausführungsform weist die erste Welle zumindest in einem axialen Abschnitt, der von dem Rotor der ersten elektrischen Maschine radial überdeckt ist, wenigstens einen Strömungskanal zur Ausbringung von Kühlmittel aus dem radialen Innenraum der ersten Welle zur ersten elektrischen Maschine auf.

In weiterer vorteilhafter Ausgestaltungsform ist vorgesehen, dass die hohl ausgeführte erste Welle einen Außendurchmesser *Dₐ* aufweist, der in Bezug zu ihrem Innendurchmesser *Dᵢ* in folgendem Verhältnis steht: *Dₐ*/*Dᵢ* = 3 ... 5 .

Das bedeutet, dass der Innendurchmesser *Dᵢ* der hohl ausgeführten ersten Welle in Bezug auf deren Außendurchmesser *Dₐ* relativ groß bemessen ist, sodass ein Kühlmittel-Transport in einfacher und zuverlässiger sowie energieeffizienter Weise durch den Innenraum der ersten Welle stattfinden kann. Weiterhin kann der relativ große Durchmesser bzw. die große Weite des Innenraums der ersten Welle bei der Montage der ersten Welle genutzt werden, um darin einen Montage-Dorn aufzunehmen, um mit dessen Hilfe die erste Welle zu bewegen bzw. zu positionieren, sodass dadurch insgesamt der Montageaufwand deutlich reduziert und die Montage vereinfacht werden kann.

Des Weiteren wird erfindungsgemäß eine Antriebsanordnung, zur Verfügung gestellt, die eine erfindungsgemäße Antriebseinheit sowie eine Verbrennungskraftmaschine aufweist, wobei die Verbrennungskraftmaschine drehfest mit dem Rotor der ersten elektrischen Maschine gekoppelt oder koppelbar ist.

Eine derartige Antriebsanordnung ist vorteilhafterweise derart ausgestaltet, dass zwischen der Verbrennungskraftmaschine und der ersten Welle, die mit dem Rotor der ersten elektrischen Maschine drehfest verbunden ist, eine erste Übersetzungsstufe angeordnet ist, zwecks Übersetzung der Drehzahl der von der Verbrennungskraftmaschine realisierten Drehbewegung auf die erste Welle.

Das Abtriebselement der Verbrennungskraftmaschine kann dabei eine Dämpfereinheit sein, oder auch eine Kupplung zum Öffnen und Schließen des Drehmoment-Übertragungspfades zwischen der Verbrennungskraftmaschine und der Antriebseinheit oder auch eine Kombination aus einer Dämpfereinheit und einer Kupplung.

Weiterhin kann das Abtriebselement als einen Bestandteil ein innenverzahntes Zahnrad aufweisen, welches mit einer Außenverzahnung der ersten Welle kämmt und somit die erste Übersetzungsstufe realisiert.

In weiterer Ausgestaltung umfasst die Antriebsanordnung auch wenigstens eine Radantriebswelle, die über das Getriebe mit der Ausgangswelle der Antriebseinheit verbunden ist, sodass eine von der Ausgangswelle realisierte Drehbewegung durch das Getriebe auf die Radantriebswelle übertragen werden kann.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
- Fig. 1:: eine schematische Darstellung einer Antriebseinheit gemäß dem Stand der Technik, und
- Fig. 2:: einen Teilbereich einer erfindungsgemäßen Antriebseinheit in Schnittansicht.

Auf Figur 1 wurde bereits zur Erläuterung des Standes der Technik im Detail eingegangen.

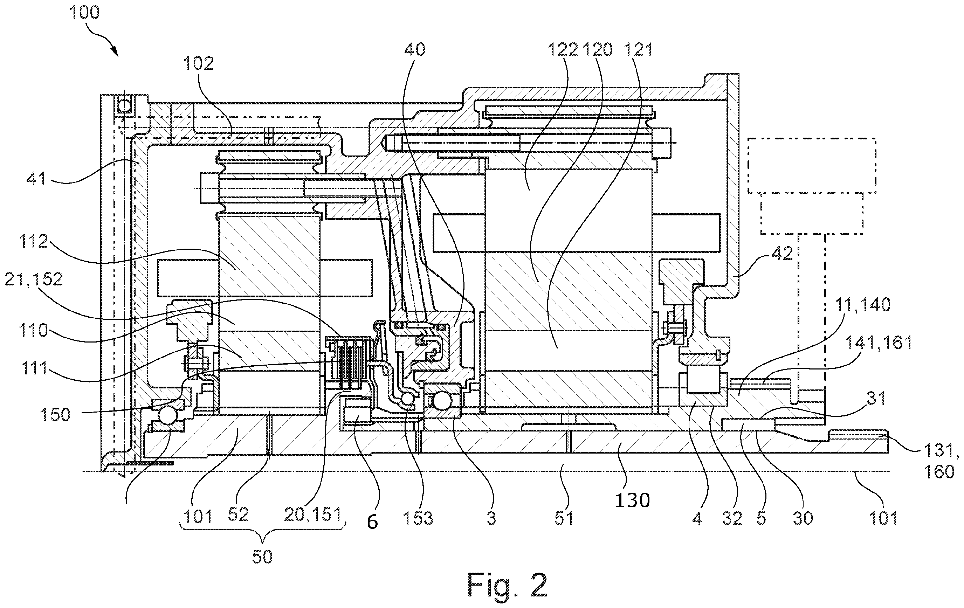

In Figur 2 ist ausschnittsweise eine erfindungsgemäße Antriebseinheit 100 für einen Antriebsstrang eines elektrisch antreibbaren Kraftfahrzeugs, insbesondere eines Hybridkraftfahrzeuges, dargestellt, die eine erste elektrischen Maschine 110 sowie eine zweite elektrische Maschine 120 aufweist, die beide auf einer gemeinsamen Rotationsachse 101 angeordnet sind. Der Rotor 111 der ersten elektrischen Maschine 110 ist dabei koaxial zur Rotationsachse 101 sowie auch zum Rotor 121 der zweiten elektrischen Maschine 120 angeordnet. Die Räume, in denen die beiden elektrischen Maschinen 110,120 angeordnet sind, sind in axialer Richtung beidseitig von jeweils einer Gehäusewand 40, 41, 42 begrenzt. Jeder elektrischen Maschine 110,120 sind jeweils axial beidseitig angeordnete Lagerungen 1,3,4,5 zugeordnet.

Der Stator 112 der ersten elektrischen Maschine 110 sowie auch der Stator 122 der zweiten elektrischen Maschine 120 ist von einem Gehäuse 102 der Antriebseinheit 100 aufgenommen.

Der Rotor 111 der ersten elektrischen Maschine 110 ist drehfest mit einer ersten Welle 130 verbunden.

Der Rotor 121 der zweiten elektrischen Maschine 120 ist drehfest mit einer Ausgangswelle 140 verbunden, die auch als Getriebeeingangswelle bezeichnet werden kann.

Die erste elektrische Maschine 110 ist mittels dem ersten Rotationslager 1 der ersten elektrischen Maschine 110 an der äußeren Gehäusewand 41 gelagert. Die zweite elektrische Maschine 120 ist durch ein erstes Rotationslager 3 der zweiten elektrischen Maschine 120 an der inneren Gehäusewand 40 des Gehäuses 102 und durch ein zweites Rotationslager 4 der zweiten elektrischen Maschine 120 an der äußeren Gehäusewand 42 gelagert.

Weiterhin ist die erste Welle 130 durch ein drittes Rotationslager 5 radial an der radialen Innenseite 31 der Ausgangswelle 140 abgestützt. Dabei ist das dritte Rotationslager 5, im Gegensatz zu den anderen Rotationslagern 1, 3, 4 hier als Nadellager und somit mit geringerem radialem Bauraumbedarf als die anderen Rotationslager 1,3,4 ausgebildet.

Weiterhin umfasst die Antriebseinheit 100 eine Trennkupplung 150, mit der die erste elektrische Maschine 110 und damit eine an der mit dem Rotor 111 der ersten elektrischen Maschine 110 drehfest verbundenen ersten Welle 130 angeschlossene Verbrennungskraftmaschine zur Drehmomentübertragung mit der Ausgangswelle 140 verbindbar oder verbunden ist. Die Trennkupplung 150 ist hier in axialer Richtung zwischen der ersten elektrischen Maschine 110 und der inneren Gehäusewand 40 angeordnet. Zur Sicherung der axialen Positionen der Trennkupplung 150 in Bezug zur Ausgangswelle 140 ist hier ein axiales Sicherungselement 6 eingesetzt, welches in der hier dargestellten Ausführungsform eine Sicherungsmutter ist, aber auch Sicherungsring ausgeführt sein könnte.

Im hier dargestellten Ausschnitt der Antriebseinheit 100 ist die erste Welle 130 einteilig ausgeführt, wobei die erste Welle 130 fest mit dem Rotor 111 der ersten elektrischen Maschine 110 verbunden ist.

Die erste Welle 130 bildet die radiale Innenseite 151 der Trennkupplung 150 bzw. ein Eingangselement 20 der Trennkupplung 150 aus, bzw. ist mit dieser Eingangsseite der Trennkupplung 150 fest verbunden.

Die radiale Außenseite 152 der Trennkupplung 150, die die Ausgangsseite der Trennkupplung 150 bzw. ein Ausgangselement 21 der Trennkupplung 150 realisiert, ist drehfest mit der Ausgangswelle 140 verbunden.

Die Trennkupplung 150 ist eine schaltbare Kupplung, die von einem offenen Zustand in einen geschlossenen Zustand und umgekehrt geschaltet werden kann. Zu diesem Zweck ist der Trennkupplung 150 ein Betätigungssystem 153 zugeordnet.

Derart kann bei Schließung der Trennkupplung 150 ein Drehmoment von der ersten Welle 130 auf die Ausgangswelle 140 oder auch umgekehrt übertragen werden.

In der hier dargestellten Ausführungsform ist somit vorgesehen, dass die beiden elektrischen Maschinen 110,120 in Reihe angeordnet sind, wobei die Rotoren 111,121 der beiden elektrischen Maschinen 110,120 bzw. deren Rotationsachsen koaxial angeordnet sind.

Die erste Welle 130 ist radial innerhalb der als Hohlwelle ausgestalteten Ausgangswelle 140 angeordnet, wodurch insgesamt das benötigte Bauvolumen der Antriebseinheit 100 gering gestaltet werden kann.

Weiterhin ist die erste Welle 130 ebenfalls als Hohlwelle ausgebildet, sodass sie einen radialen Innenraum 51 ausbildet.

Ein axialer Abschnitt 50 der ersten Welle 130, der vom Rotor 111 der ersten elektrischen Maschine 110 radial überlagert ist, umfasst dabei einen Strömungskanal 52, welcher dazu eingerichtet ist, z.B. Kühlfluid vom radialen Innenraum 51 der ersten Welle 130 zur ersten elektrischen Maschine 110 zu führen. Der Strömungskanal 52 erstreckt sich dazu in diesem axialen Abschnitt 50 im Wesentlichen in radialer Richtung senkrecht zur Rotationsachse 101. Dabei weist der radiale Innenraum 51 eine für die Leitung einer ausreichenden Menge an Kühlmittel zur Kühlung der ersten elektrischen Maschine 110 angemessene radiale Erstreckung auf. Weitere Bohrungen zur Versorgung der Trennkupplung und/oder der zweiten elektrischen Maschine mit Fluid können ebenfalls vorgesehen sein. Die hier ausschnittsweise dargestellte Antriebseinheit 100 kann weiterhin vorzugsweise ein hier nicht dargestelltes Getriebe umfassen, welches mit der auch als Getriebeeingangswelle bezeichneten Ausgangswelle 140 der Antriebseinheit 100 in Wirkverbindung steht, so dass ein von der Ausgangswelle 140 zur Verfügung gestelltes Drehmoment bzw. die von der Ausgangswelle 140 realisierte Drehbewegung über das Getriebe über- oder untersetzt an eine weitere Getriebeeinheit eines Kraftfahrzeugs geleitet werden kann, oder auch direkt auf Antriebsräder eines Kraftfahrzeuges geleitet werden kann.

Der hier dargestellte Ausschnitt einer erfindungsgemäßen Antriebseinheit 100 kann dabei Bestandteil einer Antriebsanordnung (nicht dargestellt) sein.

Eine solche Antriebsanordnung ist vorzugsweise derart ausgestaltet, dass zwischen der Verbrennungskraftmaschine und der ersten Welle 130, die mit dem Rotor 111 der ersten elektrischen Maschine 110 drehfest verbunden ist, eine erste Übersetzungsstufe 160 ausgebildet ist zwecks Übersetzung der Drehzahl der von der Verbrennungskraftmaschine realisierten Drehbewegung auf die erste Welle 130.

Die erste Übersetzungsstufe 160 wird dabei an einer Außenverzahnung 131 der ersten Welle 130 realisiert.

Derart kann eine von der Verbrennungskraftmaschine erzeugte Drehbewegung über die erste Übersetzungsstufe 160 auf die erste Welle 130 geleitet werden, sodass der darauf befindliche Rotor 111 der ersten elektrischen Maschine 110 in Drehbewegung versetzt werden kann, um als Generator betrieben zu werden.

Bei Schließung der Trennkupplung 150 kann die anliegende Drehbewegung von der ersten Welle 130, gegebenenfalls verstärkt von einem elektromotorischen Antrieb durch die erste elektrische Maschine 110, auf die Ausgangswelle 140 übertragen werden. Aufgrund der drehfesten Verbindung des Rotors 121 der zweiten elektrischen Maschine 120 mit der Ausgangswelle 140 kann ebenfalls ein von der zweiten elektrischen Maschine 120 zur Verfügung gestelltes Drehmoment zusätzlich auf die Ausgangswelle 140 aufgebracht werden.

Alternativ kann bei Öffnung der Trennkupplung 150 auch nur die zweite elektrische Maschine 120 alleine betrieben werden, um die Ausgangswelle 140 zu drehen.

Die Drehbewegung der Ausgangswelle 140 wird dabei über eine Außenverzahnung 141 der Ausgangswelle 140 auf das angeschlossene Getriebe geleitet, wobei die zweite Übersetzungsstufe 161 realisiert wird.

Ist die dargestellte erfindungsgemäße Antriebseinheit 100 in eine Antriebsanordnung integriert, können sich unterschiedlichste Fahrzustände realisieren lassen, wie zum Beispiel der Betrieb der Verbrennungskraftmaschine alleine zum Antrieb eines Kraftfahrzeugs, oder auch unter Hinzuschaltung der zweiten elektrischen Maschine 120 und/oder der ersten elektrischen Maschine 110, sowie ein gleichzeitiger Generatorbetrieb der ersten elektrischen Maschine 110 beim Betrieb der Verbrennungskraftmaschine und/oder der zweiten elektrischen Maschine 120, sowie ein alleiniger Betrieb der zweiten elektrischen Maschine 120, oder auch ein Rekuperationsbetrieb der ersten elektrischen Maschine 110 und/oder der zweiten elektrischen Maschine 120.

Mit der hier vorgeschlagenen Antriebseinheit wird eine Einrichtung zur Verfügung gestellt, die einen geringen Bauraumbedarf mit geringen Herstellungskosten sowie geringem Montageaufwand kombiniert.

### Bezugszeichenliste

- 1: erstes Rotationslager der ersten elektrischen Maschine
- 2: zweites Rotationslager der ersten elektrischen Maschine
- 3: erstes Rotationslager der zweiten elektrischen Maschine
- 4: zweites Rotationslager der zweiten elektrischen Maschine
- 5: drittes Rotationslager, Rotationslager der Ausgangswelle
- 6: axiales Sicherungselement
- 10: Rotorträger der ersten elektrischen Maschine
- 11: Rotorträger der zweiten elektrischen Maschine
- 20: Eingangselement der Trennkupplung
- 21: Ausgangselement der Trennkupplung
- 30: radiale Außenseite der ersten Welle
- 31: radiale Innenseite der Ausgangswelle
- 32: radiale Außenseite der Ausgangswelle
- 40: innere Gehäusewand
- 40a: innere Gehäusewand an der ersten elektrischen Maschine
- 40b: innere Gehäusewand an der zweiten elektrischen Maschine
- 41: äußere Gehäusewand an der ersten elektrischen Maschine
- 42: äußere Gehäusewand an der zweiten elektrischen Maschine
- 50: axialer Abschnitt der ersten Welle
- 51: radialer Innenraum der ersten Welle
- 52: Strömungskanal
- 100: Antriebseinheit
- 101: Rotationsachse
- 102: Gehäuse der Antriebseinheit
- 110: erste elektrische Maschine
- 111: Rotor der ersten elektrischen Maschine
- 112: Stator der ersten elektrischen Maschine
- 120: zweite elektrische Maschine
- 121: Rotor der zweiten elektrischen Maschine
- 122: Stator der zweiten elektrischen Maschine
- 130: erste Welle
- 131: Außenverzahnung der ersten Welle
- 140: Ausgangswelle
- 141: Außenverzahnung der Ausgangswelle
- 150: Trennkupplung
- 151: radiale Innenseite der Trennkupplung
- 152: radiale Außenseite der Trennkupplung
- 153: Betätigungssystem
- 160: erste Übersetzungsstufe
- 161: zweite Übersetzungsstufe

## Patentansprüche

1. Antriebseinheit (100) für einen Antriebsstrang eines elektrisch antreibbaren Kraftfahrzeugs, insbesondere eines Hybridkraftfahrzeuges, mit
einer ersten elektrischen Maschine (110) mit einer ersten Welle (130), wobei die erste Welle (130) ein Rotorträger eines Rotors (111) der ersten elektrischen Maschine (110) ist, mit der der Rotor (111) drehfest verbunden ist,
einer zweiten elektrischen Maschine (120) und
einer Ausgangswelle (140), wobei ein Rotor (121) der zweiten elektrischen Maschine (120) drehfest mit der Ausgangswelle (140) verbunden ist,
die Ausgangswelle (140) eine Hohlwelle ist, wobei
die erste Welle (130) abschnittsweise radial innerhalb der Ausgangswelle (140) angeordnet ist und mit einer Trennkupplung (150), mit der der Rotor (111) der ersten elektrischen Maschine (110) zur Drehmomentübertragung mit der Ausgangswelle (140) verbindbar ist, wobei der Rotor (111, 121) einer der elektrischen Maschinen (110, 120) zumindest indirekt radial am Rotor (121, 111) der anderen elektrischen Maschine (120, 110) mittels eines dritten Rotationslagers (5) abgestützt ist, wobei die Ausgangswelle (140) durch zwei Rotationslager (3, 4) im Gehäuse (102) der Antriebseinheit (100) gelagert ist, wobei die beiden Rotationslager (3, 4) in axial gegenüberliegenden Endbereichen der Ausgangswelle (140) angeordnet sind, und wobei die erste Welle (130) mittels exakt zweier Rotationslager (1, 5) abgestützt ist, und zwar an einem Endbereich die erste Welle (130) mittels eines ersten Rotationslagers (1) an einer Gehäusewand (102) abgestützt und an einem axial gegenüberliegenden Endbereich mittels des dritten Rotationslagers (5) an der Ausgangswelle (140) abgestützt ist.

2. Antriebseinheit nach Anspruch 1, wobei sich die erste Welle (130) durch das dritte Rotationslager (5) radial an der radialen Innenseite (31) der Ausgangswelle (140) abstützt.

3. Antriebseinheit nach einem der Ansprüche 1 oder 2, wobei, die erste Welle (130) einstückig ausgebildet ist.

4. Antriebseinheit nach einem der Ansprüche 2 oder 3, wobei die erste Welle (130) zumindest in einem axialen Abschnitt (50), der von dem Rotor (111) der ersten elektrischen Maschine (110) radial überdeckt ist, wenigstens einen Strömungskanal (52) aufweist zur Ausbringung von Kühlmittel aus dem radialen Innenraum (51) der ersten Welle (130) zur ersten elektrischen Maschine (110).

5. Antriebsanordnung mit einer Antriebseinheit (100) gemäß einem der Ansprüche 1 bis 4 sowie mit einer Verbrennungskraftmaschine, die drehfest mit dem Rotor (111) der ersten elektrischen Maschine (110) gekoppelt oder koppelbar ist.

## Claims

1. A drive unit (100) for a powertrain of an electrically driveable motor vehicle, in particular a hybrid motor vehicle, comprising a first electric machine (110) having a first shaft (130), wherein the first shaft (130) is a rotor support of a rotor (111) of the first electric machine (110), to which the rotor (111) is connected in a rotationally fixed manner,
a second electric machine (120), and
an output shaft (140), wherein
a rotor (121) of the second electric machine (120) can be connected to the output shaft (140) in a rotationally fixed manner,
the output shaft (140) is a hollow shaft, wherein
the first shaft (130) is arranged in sections radially within the output shaft (140) and is connectable to a separating clutch (150), by which the rotor (111) of the first electric machine (110) is connectable to the output shaft (140) for torque transfer, wherein the rotor (111, 121) of one of the electric machines (110, 120) is supported at least indirectly radially on the rotor (121, 111) of the other electric machine (120, 110) by means of a third rotary bearing (5), wherein the output shaft (140) is mounted in the housing (102) of the drive unit (100) by two rotary bearings (3, 4), wherein the two rotary bearings (3, 4) are arranged at axially opposite end regions of the output shaft (140), and wherein the first shaft (130) is supported by means of exactly two rotary bearings (1, 5), more specifically, at an end region the first shaft (130) is supported by means of a first rotary bearing (1) on a housing wall (102) and at an axially opposite end region by means of the third rotary bearing (5) on the output shaft (140).

2. The drive unit according to claim 1, wherein the first shaft (130) is supported by the third rotary bearing (5) radially on the radial inner side (31) of the output shaft (140).

3. The drive unit according to one of claims 1 or 2, wherein the first shaft (130) is formed in one piece.

4. The drive unit according to one of claims 2 or 3, wherein the first shaft (130), at least in an axial section (50) that is radially overlapped by the rotor (111) of the first electric machine (110), has at least one flow channel (52) for routing coolant from the radial interior (51) of the first shaft (130) to the first electric machine (110).

5. A drive assembly having a drive unit (100) according to one of claims 1 to 4 and having an internal combustion engine, which is coupled or can be coupled in a rotationally fixed manner to the rotor (111) of the first electric machine (110).

## Revendications

1. Unité d'entraînement (100) pour une chaîne cinématique d'un véhicule automobile pouvant être entraîné électriquement, en particulier d'un véhicule automobile hybride, comportant une première machine électrique (110) comportant un premier arbre (130), le premier arbre (130) étant un support de rotor d'un rotor (111) de la première machine électrique (110), auquel le rotor (111) est relié de manière solidaire en rotation,
une seconde machine électrique (120) et
un arbre de sortie (140), dans laquelle
un rotor (121) de la seconde machine électrique (120) est relié de manière solidaire en rotation à l'arbre de sortie (140),
l'arbre de sortie (140) est un arbre creux, dans laquelle
le premier arbre (130) est disposé par sections radialement à l'intérieur de l'arbre de sortie (140) et avec un embrayage de séparation (150), avec lequel le rotor (111) de la première machine électrique (110) peut être relié à l'arbre de sortie (140) pour la transmission du couple, le rotor (111, 121) de l'une des machines électriques (110, 120) étant soutenu au moins indirectement radialement sur le rotor (121, 111) de l'autre machine électrique (120, 110) au moyen d'un troisième palier de rotation (5), l'arbre de sortie (140) étant soutenu par deux paliers de rotation (3, 4) dans le boîtier (102) de l'unité d'entraînement (100), les deux paliers de rotation (3, 4) étant disposés dans des zones d'extrémité axialement opposées de l'arbre de sortie (140) et le premier arbre (130) étant supporté au moyen de précisément deux paliers de rotation (1, 5), le premier arbre (130) étant supporté dans une zone d'extrémité au moyen d'un premier palier de rotation (1) sur une paroi (102) du boîtier et étant supporté dans une zone d'extrémité axialement opposée au moyen du troisième palier de rotation (5) sur l'arbre de sortie (140).

2. Unité d'entraînement selon la revendication 1, dans laquelle le premier arbre (130) s'appuie radialement sur la face intérieure radiale (31) de l'arbre de sortie (140) par le troisième palier de rotation (5).

3. Unité d'entraînement selon l'une des revendications 1 ou 2, dans laquelle le premier arbre (130) est formé d'une seule pièce.

4. Unité d'entraînement selon l'une des revendications 2 ou 3, dans laquelle le premier arbre (130) présente, au moins dans une section axiale (50) qui est recouverte radialement par le rotor (111) de la première machine électrique (110), au moins un canal d'écoulement (52) pour l'évacuation de fluide de refroidissement depuis l'espace intérieur radial (51) du premier arbre (130) vers la première machine électrique (110).

5. Système d'entraînement comprenant une unité d'entraînement (100) selon l'une des revendications 1 à 4, ainsi qu'un moteur à combustion interne qui est ou peut être couplé solidaire en rotation au rotor (111) de la première machine électrique (110).
